(19) Europäisches Patentamt / European Patent Office / Office européen des brevets

(11) **EP 2 913 685 B1**

(12) **FASCICULE DE BREVET EUROPEEN**

(45) Date de publication et mention
de la délivrance du brevet:
**16.09.2020 Bulletin 2020/38**

(21) Numéro de dépôt: **15151962.6**

(22) Date de dépôt: **21.01.2015**

(51) Int Cl.:
***G01R 19/14*** *(2006.01)*

(54) **Interface universelle pour détecteur**

Universalschnittstelle für Detektor

Universal interface for detector

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.02.2014 FR 1451525**

(43) Date de publication de la demande:
**02.09.2015 Bulletin 2015/36**

(73) Titulaire: **Schneider Electric Industries SAS
92500 Rueil-Malmaison (FR)**

(72) Inventeurs:
• **Caseras, Loïc
16410 Dirac (FR)**
• **Roger, Mireille
16600 Ruelle-sur-Touvre (FR)**
• **Tardivon, Alain
16170 Gourville (FR)**

(74) Mandataire: **Dufresne, Thierry et al
Schneider Electric Industries SAS
Service Propriété Industrielle
35 rue Joseph Monier - CS 30323
92506 Rueil-Malmaison Cedex (FR)**

(56) Documents cités:
**FR-A1- 2 951 264     US-A- 5 818 130**

• **"UNIVERSAL SERIAL BUS SPECIFICATION
REVISION 2.0", UNIVERSAL SERIAL BUS
SPECIFICATION,, no. REV. 2.0, 27 April 2000
(2000-04-27), pages 1-622, XP001544046,**

**EP 2 913 685 B1**

## Description

### Domaine technique de l'invention

La présente invention se rapporte à une interface universelle destinée à être agencée entre un détecteur et un équipement de contrôle-commande. L'interface universelle de l'invention est adaptée pour se connecter sur un détecteur à deux fils, trois fils ou quatre fils. Le détecteur pourra être à sortie NO et/ou NC, PNP et/ou NPN.

### Etat de la technique

Un détecteur de type industriel est employé pour la détection d'objet et est connecté à un équipement de contrôle-commande tel que par exemple un automate programmable (PLC), un contrôleur, un module d'entrée/sortie, une passerelle de communication, un actionneur... Chacun de ces équipements requiert des informations de types différents de la part des détecteurs qui lui sont connectés.

Dans le cas d'une détection simple de présence ou d'absence d'un objet, une information binaire tout ou rien est suffisante. Cependant, selon le détecteur employé, cette information binaire peut être fournie de différentes façons. Elle peut être fournie via l'ouverture du circuit de sortie d'un détecteur. Ce détecteur est alors configuré avec une sortie de type normalement fermé (NC pour "Normally Closed"). Elle peut aussi être fournie par la fermeture du circuit de sortie d'un détecteur. Ce détecteur est alors configuré avec une sortie de type normalement ouvert (NO pour "Normally open"). Elle peut également être fournie en configurant la sortie d'un détecteur par rapport au potentiel électrique positif de l'alimentation, le détecteur présente alors une configuration à sortie NPN, ou au potentiel électrique négatif de l'alimentation, le détecteur présente alors une configuration à sortie PNP. Par ailleurs, l'information de sortie peut également être fournie sur différents supports physiques, selon le nombre de fils employés par le détecteur. Il peut s'agir d'un détecteur à deux fils dans lequel la sortie est en série avec la charge présente sur l'un des fils d'alimentation du détecteur, un détecteur à trois fils qui comporte alors un fil dédié pour sa sortie, ou un détecteur à quatre fils présentant deux fils dédiés pour deux sorties identiques ou complémentaires.

Selon le type de sortie du détecteur employé, il sera nécessaire d'adapter la configuration de l'équipement de contrôle-commande qui lui est connecté afin que celui-ci puisse être toujours compatible avec l'ensemble des sorties proposées.

Le but de l'invention est de proposer une interface universelle venant se connecter à un détecteur de tout type, qu'il soit à deux fils, trois fils ou quatre fils et à une ou deux sorties de type NO, NC, PNP ou NPN et permettant d'assurer la communication de changement d'état entre ce détecteur et un équipement de contrôle-commande sans avoir à adapter cet équipement.

### Exposé de l'invention

Ce but est atteint par une interface universelle agencée pour se positionner entre un détecteur et un équipement de contrôle/commande et comprenant :

- un connecteur à au moins quatre points de connexion d'entrée agencés pour se connecter sur le détecteur et comprenant un premier point de connexion destiné à recevoir un premier potentiel électrique et à se connecter sur une première entrée du détecteur, un deuxième point de connexion destiné à se connecter à une première sortie du détecteur pour recevoir un premier signal de sortie-détecteur, un troisième point de connexion destiné à recevoir un deuxième potentiel électrique et à se connecter sur une deuxième entrée du détecteur, un quatrième point de connexion destiné à se connecter à une deuxième sortie du détecteur pour recevoir un deuxième signal de sortie-détecteur,

- une unité de traitement agencée pour convertir chaque signal de sortie-détecteur en une information binaire à envoyer à l'équipement de contrôle-commande et représentative d'un état commuté ou d'un état non commuté de chaque sortie du détecteur.

Selon une particularité, l'unité de traitement comporte :

- une première unité de comparaison seuil haut connectée au deuxième point de connexion et agencée pour comparer le premier signal de sortie-détecteur appliqué sur la première sortie du détecteur avec une valeur seuil haute en vue de générer en sortie un premier signal de comparaison, et une première unité de comparaison seuil bas connectée au deuxième point de connexion et agencée pour comparer le premier signal de sortie-détecteur appliqué sur la première sortie du détecteur avec une valeur seuil basse pour générer en sortie un deuxième signal de comparaison,

- une première unité logique connectée en sortie de la première unité de comparaison seuil haut et de la première unité de comparaison seuil bas et comprenant une fonction logique de traitement agencée pour générer un premier signal de sortie-interface en fonction du premier signal de comparaison et du deuxième signal de comparaison,

- une deuxième unité de comparaison seuil haut connectée au quatrième point de connexion et agencée pour comparer le deuxième signal de sortie-détecteur appliqué sur la deuxième sortie du détecteur avec une valeur seuil haute en vue de générer en sortie un premier signal de comparaison, et une deuxième unité de comparaison seuil bas connectée au quatrième point de connexion et agencée pour comparer le deuxième signal de sortie-détecteur appliqué sur la deuxième sortie du détecteur avec une valeur seuil basse pour générer en sortie un deuxième signal de comparaison,

- une deuxième unité logique connectée en sortie de la deuxième unité de comparaison seuil haut et de la deuxième unité de comparaison seuil bas et comprenant une fonction logique de traitement agencée pour générer un deuxième signal de sortie-interface en fonction du premier signal de comparaison et du deuxième signal de comparaison.

Selon une autre particularité, le connecteur comporte un cinquième point de connexion.

L'invention concerne également un système de détection comportant un détecteur et une interface universelle telle que définie ci-dessus connectée audit détecteur.

Selon une particularité, le détecteur est à deux fils, trois fils ou quatre fils.

Selon une autre particularité, le système comporte un équipement de contrôle-commande recevant en entrée le premier signal de sortie-interface et le deuxième signal de sortie-interface.

Selon une autre particularité, le système comporte un oscillateur recevant en entrée le premier signal de sortie-interface et le deuxième signal de sortie-interface et ledit oscillateur comporte des moyens de génération d'un signal de sortie dont la fréquence varie selon l'état du premier signal de sortie-interface et l'état du deuxième signal de sortie-interface.

Selon une autre particularité, le système comporte un équipement de contrôle-commande recevant en entrée le signal de sortie de l'oscillateur.

## Brève description des figures

D'autres caractéristiques et avantages vont apparaître dans la description détaillée qui suit faite en regard des dessins annexés dans lesquels :

- les figures 1A à 1J représentent les différents types de sorties de détecteurs connues,
- les figures 2A à 2G représentent l'interface universelle de l'invention connectée sur différentes configurations de sorties de détecteurs,
- les figures 3A et 3B montrent l'association de l'interface avec un oscillateur ainsi que les signaux de fréquence générés selon l'état des signaux de sortie de l'interface,
- la figure 4 représente le connecteur de l'interface universelle et la position de ses différents points de connexion.

## Description détaillée d'au moins un mode de réalisation

L'invention concerne une interface INT universelle pouvant se connecter à tous les types de détecteurs D industriels de manière à recueillir les informations sur sa sortie ou ses sorties et à les communiquer à un équipement de contrôle-commande. Sur les figures annexées, l'équipement de contrôle-commande représenté est un automate programmable (PLC pour "Programmable Logic Controller") mais, bien entendu, ce choix n'est pas limitatif.

Dans la suite de la description, par détecteur on entend les détecteurs à deux fils, trois fils ou quatre fils ainsi que les interrupteurs de position.

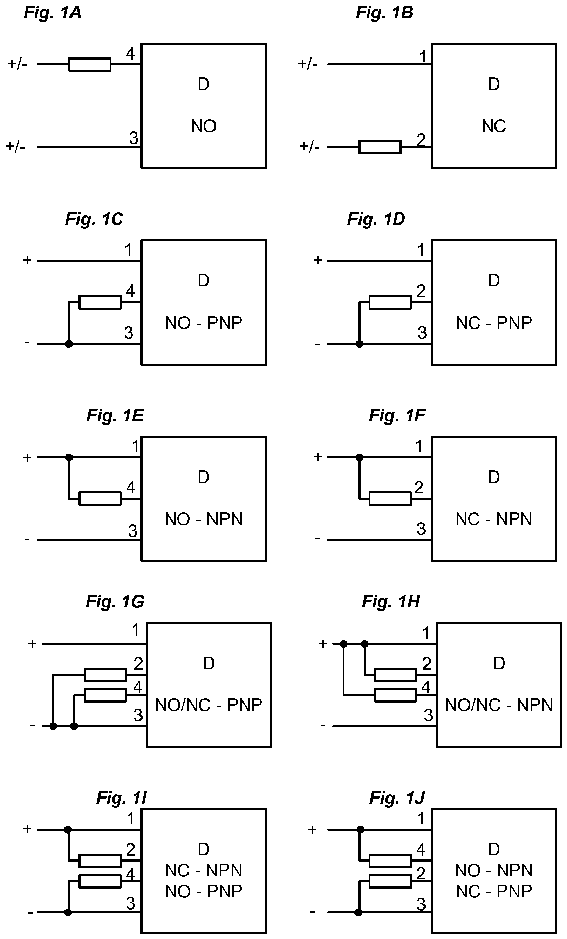

Les figures 1A à 1J représentent différents types de sorties de détecteurs connues.

Les détecteurs comportent chacun plusieurs bornes de connexion numérotées de manière standard. Cette numérotation de 1 à 5 des bornes de connexion est également reprise de manière correspondante dans l'interface INT universelle de l'invention. Dans la suite de la description, nous décrivons une interface INT universelle à cinq points de connexion lui permettant de s'adapter sur tous types de détecteurs D ayant un connecteur à quatre points de connexion ou à cinq points de connexion. Cependant, comme certains détecteurs ont un connecteur à seulement quatre points de connexion, l'interface INT de l'invention pourrait ne comporter que quatre points de connexion, sans perdre totalement son universalité. L'objet de l'invention est donc bien une interface INT universelle doté d'un connecteur à au moins quatre points de connexion. Sur les figures 1A et 1B, le détecteur D représenté est à deux fils. Les deux fils sont connectés sur les bornes 3 et 4 en version NO ou sur les bornes 1 et 2 en version NC. Sur chaque fil est appliqué un potentiel électrique en vue d'alimenter le détecteur D. Lorsque sa sortie est activée, la différence de potentiel diminue fortement.

Sur les figures 1C à 1F, les détecteurs D représentés sont à trois fils. Selon la configuration, les trois fils sont reliés aux bornes 1, 4 et 3 du détecteur en version NO ou aux bornes 1, 2 et 3 du détecteur D en version NC. Un fil supplémentaire est ainsi employé pour recevoir le signal de sortie du détecteur. Le détecteur D à trois fils peut être à sortie PNP ou NPN. Le signal de sortie appliqué est alors à un potentiel électrique haut ou à un potentiel électrique bas.

Sur les figures 1G à 1J, les détecteurs D représentés sont à quatre fils. Les quatre fils sont reliés aux bornes 1, 2, 3 et 4. Ces détecteurs comportent deux sorties, permettant ainsi de choisir l'une des deux sorties ou d'exploiter les deux sorties. Les deux sorties peuvent être identiques de type NO ou NC ou complémentaires NO et NC.

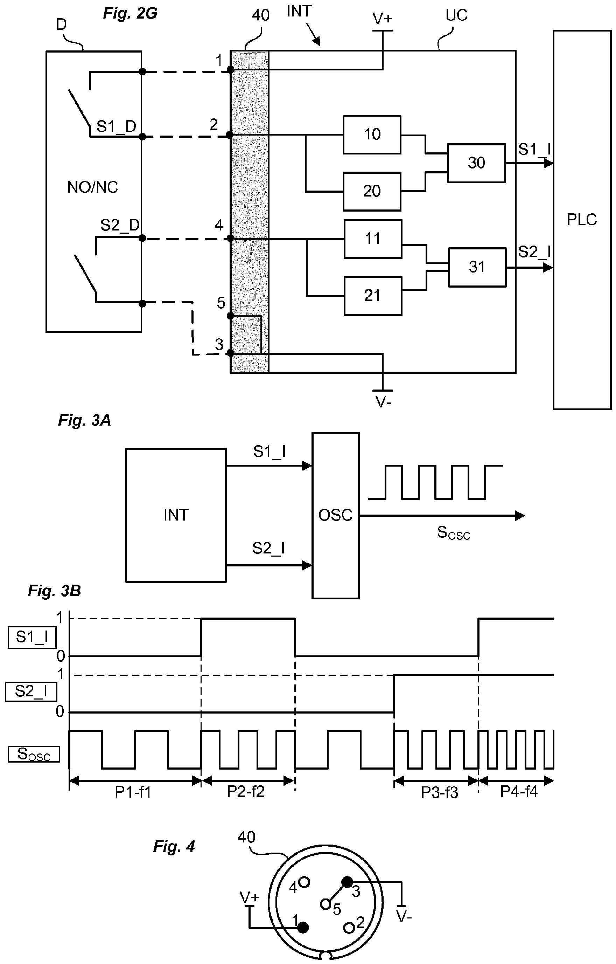

Afin de pouvoir s'adapter à tous ces types de détecteurs D, l'interface INT universelle de l'invention utilise ainsi un connecteur 40 à cinq points de connexion tel que représenté sur la figure 4. Les points de connexion sont dénommés premier point de connexion (correspondant à la borne 1), deuxième point de connexion (correspondant à la borne 2), troisième point de connexion (correspondant à la borne 3), quatrième point de connexion (correspondant à la borne 4) et cinquième point de connexion (correspondant à la borne 5).

L'objectif de l'interface INT universelle de l'invention est de convertir le signal de sortie ou les signaux de sortie S1_D, S2_D du détecteur D en une information binaire représentative de l'état commuté ou non commuté de chaque sortie du détecteur, cette information binaire étant exploitable par l'équipement de contrôle-commande connecté. L'interface INT universelle comporte ainsi deux entrées connectées au deuxième point de connexion et quatrième point de connexion, pouvant recevoir chacune un signal de sortie-détecteur S1_D ou S2_D. Sur les figures annexées, pour chaque signal de sortie S1_D, S2_D du détecteur D appliqué sur une entrée distincte de l'interface INT, l'information binaire générée par l'interface INT universelle correspond à un signal de sortie désigné respectivement S1_I, S2_I.

L'interface INT universelle connectée au détecteur D comporte ainsi une unité de traitement UC agencée pour réaliser cette conversion.

L'unité de traitement UC de l'interface INT met en œuvre, pour chaque sortie du détecteur D, des fonctions de comparaison permettant de détecter le passage à un potentiel haut ou le passage à un potentiel bas de chaque sortie du détecteur D, et une fonction logique permettant de tenir compte de la logique de fonctionnement du détecteur D auquel l'interface INT est connectée.

Les fonctions de comparaison sont mises en œuvre pour comparer le potentiel électrique appliqué sur chacune des deux sorties d'un détecteur D avec deux valeurs seuils $V_{seuil-}$ et $V_{seuil+}$ de tension, désignés ci-après valeur seuil haute $V_{seuil+}$ et valeur seuil basse $V_{seuil-}$.

De manière plus précise, pour traiter le premier signal de sortie-détecteur S1_D venant de la première sortie du détecteur, l'unité de traitement UC comporte :

- une unité de comparaison 10 seuil haut connectée au deuxième point de connexion (2), correspondant à la première entrée de l'interface INT, et mettant en œuvre une fonction de comparaison du premier signal de sortie-détecteur S1_D appliqué sur la première sortie du détecteur D avec la valeur seuil haute $V_{seuil+}$ en vue de générer en sortie un premier signal de comparaison,
- une unité de comparaison 20 seuil bas connectée au deuxième point de connexion (2) et mettant en œuvre une fonction de comparaison du premier signal de sortie-détecteur S1_D avec la valeur seuil basse $V_{seuil-}$ en vue de générer en sortie un deuxième signal de comparaison,
- une unité logique 30 connectée en sortie de l'unité de comparaison 10 seuil haut et de l'unité de comparaison 20 seuil bas et comprenant une fonction logique agencée pour générer un signal de sortie-interface S1_I à destination de l'équipement de contrôle-commande (PLC) en fonction du premier signal de comparaison et du deuxième signal de comparaison.

Pour traiter le deuxième signal de sortie-détecteur S2_D venant de la deuxième sortie du détecteur D, l'unité de traitement UC comporte la même architecture que celle décrite ci-dessus, c'est-à-dire :

- une unité de comparaison 11 seuil haut connectée au quatrième point de connexion (4), correspondant à la deuxième entrée de l'interface INT, et mettant en œuvre une fonction de comparaison du deuxième signal de sortie-détecteur S2_D appliqué sur la deuxième sortie du détecteur D avec la valeur seuil haute $V_{seuil+}$ en vue de générer en sortie un premier signal de comparaison,
- une unité de comparaison 21 seuil bas connectée au quatrième point de connexion (4) et mettant en œuvre une fonction de comparaison du deuxième signal de sortie-détecteur S2_D avec la valeur seuil basse $V_{seuil-}$ en vue de générer en sortie un deuxième signal de comparaison,
- une unité logique 31 connectée en sortie de l'unité de comparaison 11 seuil haut et de l'unité de comparaison 21 seuil bas et comprenant une fonction logique agencée pour générer un signal de sortie-interface S2_I à destination de l'équipement de contrôle-commande (PLC) en fonction du premier signal de comparaison et du deuxième signal de comparaison.

Pour chaque sortie du détecteur D, la solution consiste donc à comparer chaque signal de sortie-détecteur aux deux valeurs seuil décrites ci-dessus. Les deux valeurs seuil sont choisies de manière à être comprises entre les deux potentiels électriques d'alimentation du détecteur, c'est-à-dire :

$$V- < V_{seuil-} < V_{seuil+} < V+$$

Lorsque la sortie du détecteur D est non commutée, le signal de sortie-détecteur S1_D (ou S2_D) est à un potentiel électrique Vd. Dans cet état, il est positionné entre les deux valeurs seuil $V_{seuil-}$ et $V_{seuil+}$ et les sorties des deux unités de comparaison sont au même état qui sera soit un état haut, soit un état bas.

Lorsque la sortie du détecteur est commutée, le potentiel électrique du signal de sortie-détecteur S1_D (ou S2_D) passe soit au-dessus de la valeur seuil haute $V_{seuil+}$ pour une sortie de type PNP, soit au-dessous de la valeur seuil basse $V_{seuil-}$ pour une sortie NPN. Si la

valeur seuil haute $V_{seuil+}$ est franchie, le signal de comparaison en sortie de l'unité de comparaison 10 (ou 11) seuil haut change d'état et si la valeur seuil basse $V_{seuil-}$ est franchie, le signal de comparaison en sortie de l'unité de comparaison 20 (ou 21) seuil bas change d'état.

Les deux signaux de comparaison obtenus sont ensuite injectés dans l'unité logique 30 (ou 31). Chaque unité logique met en œuvre une fonction logique.

Si les fonctions de comparaison choisies sont telles que leur sortie est à l'état haut lorsque le détecteur D est dans un état non commuté, alors la fonction logique doit être du type "AND" si l'on souhaite un traitement de l'information "état commuté" du détecteur en logique négative ou du type "NAND" pour un traitement de l'information "état commuté" en logique positive.

En revanche, si les fonctions de comparaison choisies sont telles que leur sortie est à l'état bas lorsque le détecteur D est dans un état non commuté, alors la fonction logique doit être du type "OR" si l'on souhaite un traitement de l'information "état commuté" du détecteur en logique positive ou du type "NOR" pour un traitement de l'information "état commuté" en logique négative.

Bien entendu, si le détecteur D ne comporte qu'une seule sortie, l'unité de traitement de l'interface INT universelle ne met en œuvre que les deux unités de comparaison 10, 20 (ou 11, 21) et l'unité logique 30 (ou 31) associées à cette sortie. C'est le cas pour les détecteurs à deux fils ou trois fils qui n'ont qu'une seule sortie.

La valeur seuil haute $V_{seuil+}$ et la valeur seuil basse $V_{seuil-}$ peuvent être définies par rapport au potentiel électrique d'alimentation positif V+, permettant d'assurer une cohérence entre les tensions, quelles que soient les variations du potentiel électrique d'alimentation V+.

Selon une variante de réalisation, l'information binaire issue du traitement de chaque signal de sortie S1_D, S2_D du détecteur D par l'interface INT universelle peut être transformée en une information fréquentielle, ce qui permet de s'affranchir de toute procédure d'apprentissage. Il suffit pour cela de connecter les deux sorties de l'interface INT universelle à un oscillateur OSC (figure 3A) qui comporte des moyens de génération d'un signal $S_{OSC}$ dont la fréquence sera modifiée selon l'état de chacun des signaux de sortie S1_I, S2_I de l'interface INT. En référence à la figure 3B, on aura par exemple : Si S1_I=0 et S2_I=0, l'oscillateur génère, sur une période P1, un signal $S_{OSC}$ à une première fréquence f1.

Si S1_I=1 et S2_I=0, l'oscillateur génère, sur une période P2, un signal $S_{OSC}$ à une deuxième fréquence f2, différente de la première fréquence.

Si S1_I=0 et S2_I=1, l'oscillateur génère, sur une période P3, un signal $S_{OSC}$ à une troisième fréquence f3, différente de la première fréquence f1 et de la deuxième fréquence f2.

Si S1_I=1 et S2_I=1, l'oscillateur génère, sur une quatrième période P4, un signal $S_{OSC}$ à une quatrième fréquence f4, différente de la première fréquence f1, deuxième fréquence f2 et troisième fréquence f3.

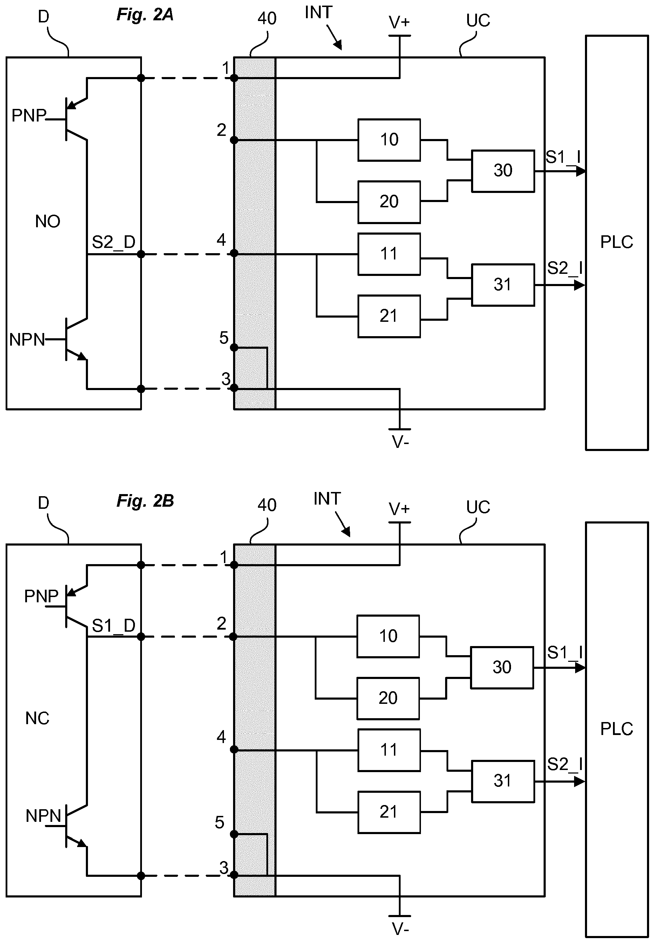

Sur les figures 2A à 2G, l'interface INT universelle de l'invention est associée aux différents types de détecteurs connus. Selon la configuration du détecteur D, l'interface INT universelle vient traiter la sortie ou les sorties du détecteur pour la ou les convertir en information binaire à traiter par l'équipement de contrôle-commande (PLC) situé en aval.

Sur la figure 2A, l'interface INT universelle est connectée à un détecteur D à trois fils à sortie NO, NPN ou PNP.

Sur la figure 2B, l'interface INT universelle est connectée à un détecteur D à trois fils à sortie NC, NPN ou PNP.

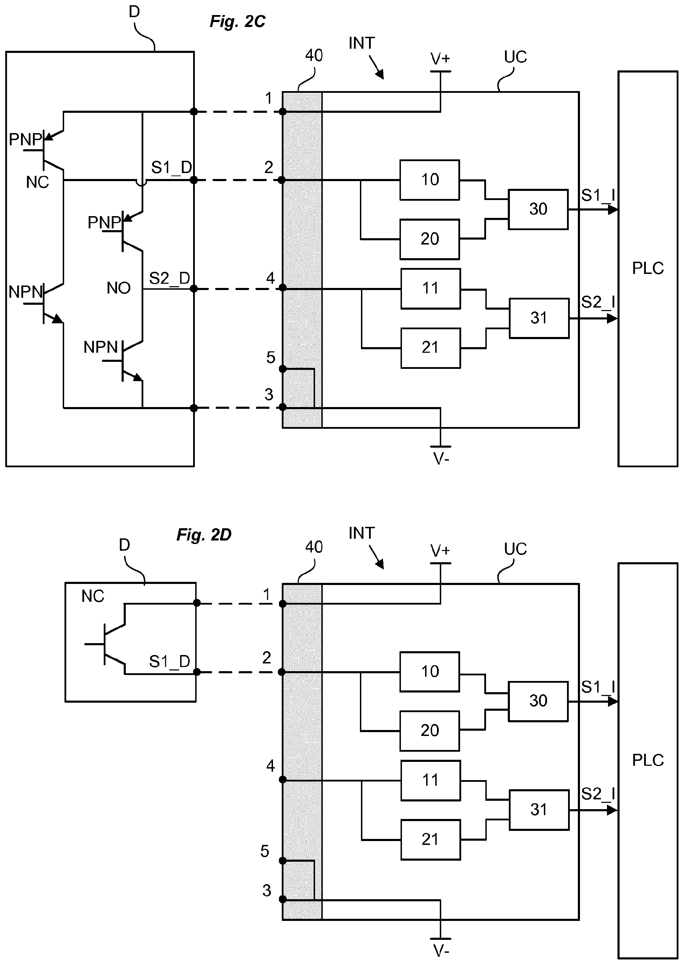

Sur la figure 2C, l'interface INT universelle est connectée à un détecteur à quatre fils à une sortie NO et une sortie NC de type NPN ou PNP.

Sur la figure 2D, l'interface INT universelle est connectée à un détecteur à deux fils à sortie NC.

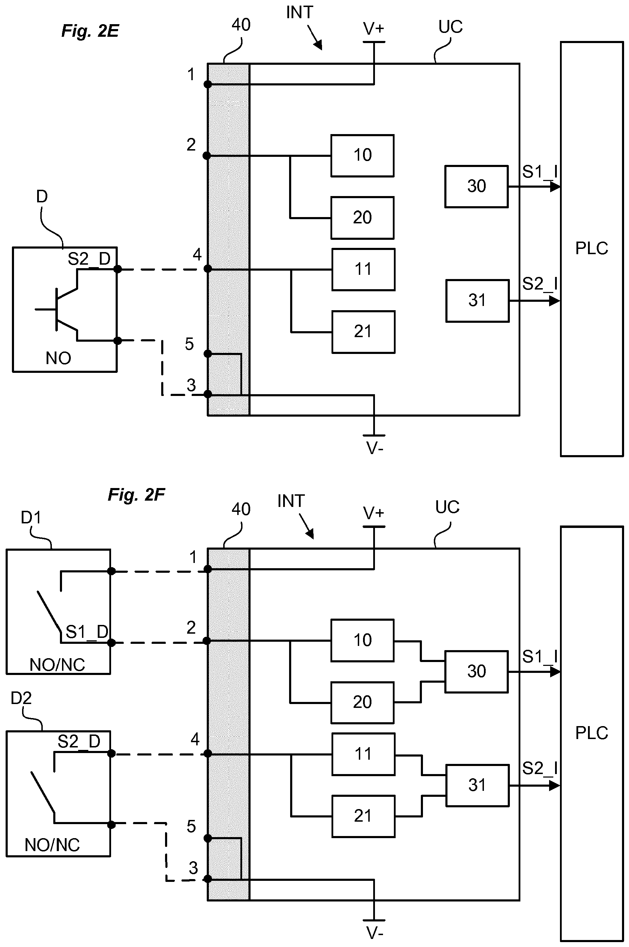

Sur la figure 2E, l'interface INT universelle est connectée à un détecteur à deux fils à sortie NO.

**[0046]** Sur la figure 2F, l'interface INT universelle est connectée à deux détecteurs, de type interrupteur de position. Chaque interrupteur de position est connecté sur une entrée distincte de l'interface INT.

**Revendications**

1. Interface (INT) universelle agencée pour se positionner entre un détecteur (D) et un équipement de contrôle/commande, ladite interface comportant :

    - un connecteur (40) à au moins quatre points de connexion d'entrée agencés pour se connecter sur le détecteur (D) et comprenant un premier point de connexion destiné à recevoir un premier potentiel électrique (V+) et à se connecter sur une première entrée du détecteur, un deuxième point de connexion destiné à se connecter à une première sortie du détecteur pour recevoir un premier signal de sortie-détecteur (S1_D), un troisième point de connexion destiné à recevoir un deuxième potentiel électrique (V-) et à se connecter sur une deuxième entrée du détecteur, un quatrième point de connexion destiné à se connecter à une deuxième sortie du détecteur pour recevoir un deuxième signal de sortie-détecteur (S2_D),
    - **Caractérisée en ce qu'**elle comporte :
    - une unité de traitement (UC) agencée pour convertir chaque signal de sortie-détecteur (S1_D, S2_D) en une information binaire à envoyer à l'équipement de contrôle-commande et représentative d'un état commuté ou d'un état non commuté de chaque sortie du détecteur (D)
    - l'unité de traitement (UC) étant configurée pour mettre en œuvre, pour chaque sortie du détecteur (D), des fonctions de comparaison permettant de détecter le passage à un potentiel haut ou le passage à un potentiel bas de chaque sortie du détecteur (D) et une fonction logique permettant de tenir compte de la logique de fonctionnement du détecteur (D) auquel l'interface (INT) est connectée.

2. Interface (INT) universelle selon la revendication 1, **caractérisée en ce que** l'unité de traitement (UC) comporte :

   - une première unité de comparaison (10) seuil haut connectée au deuxième point de connexion et agencée pour comparer le premier signal de sortie-détecteur (S1_D) appliqué sur la première sortie du détecteur avec une valeur seuil haute ($V_{seuil+}$) en vue de générer en sortie un premier signal de comparaison et une première unité de comparaison (20) seuil bas connectée au deuxième point de connexion et agencée pour comparer le premier signal de sortie-détecteur (S1_D) appliqué sur la première sortie du détecteur avec une valeur seuil basse ($V_{seuil-}$) pour générer en sortie un deuxième signal de comparaison,
   - une première unité logique (30) connectée en sortie de la première unité de comparaison (10) seuil haut et de la première unité de comparaison (20) seuil bas et comprenant une fonction logique de traitement agencée pour générer un premier signal de sortie-interface (S1_I) en fonction du premier signal de comparaison et du deuxième signal de comparaison,
   - une deuxième unité de comparaison (11) seuil haut connectée au quatrième point de connexion et agencée pour comparer le deuxième signal de sortie-détecteur (S2_D) appliqué sur la deuxième sortie du détecteur (D) avec une valeur seuil haute ($V_{seuil+}$) en vue de générer en sortie un premier signal de comparaison et une deuxième unité de comparaison (21) seuil bas connectée au quatrième point de connexion et agencée pour comparer le deuxième signal de sortie-détecteur (S2_D) appliqué sur la deuxième sortie du détecteur (D) avec une valeur seuil basse ($V_{seuil-}$) pour générer en sortie un deuxième signal de comparaison,
   - une deuxième unité logique (31) connectée en sortie de la deuxième unité de comparaison (11) seuil haut et de la deuxième unité de comparaison (21) seuil bas et comprenant une fonction logique de traitement agencée pour générer un deuxième signal de sortie-interface (S2_I) en fonction du premier signal de comparaison et du deuxième signal de comparaison.

3. Interface universelle selon la revendication 1 ou 2, **caractérisée en ce que** le connecteur (40) comporte un cinquième point de connexion.

4. Système de détection comportant un détecteur (D) et **caractérisé en ce qu'**il comporte une interface (INT) universelle conforme à l'une des revendications 1 à 3 connectée audit détecteur.

5. Système selon la revendication 4, **caractérisé en ce que** le détecteur (D) est à deux fils, trois fils ou quatre fils.

6. Système selon la revendication 4 ou 5, **caractérisé en ce qu'**il comporte un équipement de contrôle-commande recevant en entrée le premier signal de sortie-interface (S1_I) et le deuxième signal de sortie-interface (S2_I).

7. Système selon la revendication 4 ou 5, **caractérisé en ce qu'**il comporte un oscillateur recevant en entrée le premier signal de sortie-interface (S1_I) et le deuxième signal de sortie-interface (S2_I) et **en ce que** ledit oscillateur comporte des moyens de génération d'un signal de sortie (SOSC) dont la fréquence varie selon l'état du premier signal de sortie-interface (S1_I) et l'état du deuxième signal de sortie-interface (S2_I).

8. Système selon la revendication 7, **caractérisé en ce qu'**il comporte un équipement de contrôle-commande recevant en entrée le signal de sortie (SOSC) de l'oscillateur (OSC).

**Patentansprüche**

1. Universalschnittstelle (INT), welche dazu eingerichtet ist, zwischen einem Detektor (D) und einer Überwachungs- und Steuereinrichtung positioniert zu werden, wobei die Schnittstelle aufweist:

   - einen Verbinder (40) mit mindestens vier Eingangsanschlusspunkten, die dazu eingerichtet sind, mit dem Detektor (D) verbunden zu werden, und einen ersten Anschlusspunkt, der dazu bestimmt ist, ein erstes elektrisches Potential (V+) zu empfangen und mit einem ersten Eingang des Detektors verbunden zu werden, einen zweiten Anschlusspunkt, der dazu bestimmt ist, mit einem ersten Ausgang des Detektors verbunden zu werden, um ein erstes Detektorausgangssignal (S1_D) zu empfangen, einen dritten Anschlusspunkt, der dazu bestimmt ist, ein zweites elektrisches Potential (V-) zu empfangen und mit einem zweiten Eingang des Detektors verbunden zu werden, und einen vierten Anschlusspunkt, der dazu bestimmt ist, mit einem zweiten Ausgang des Detektors verbunden zu werden, um ein zweites Detektorausgangssignal (S2_D) zu empfangen, umfassen,
- **dadurch gekennzeichnet, dass** sie aufweist:
- eine Verarbeitungseinheit (UC), die dazu eingerichtet ist, jedes Detektorausgangssignal (S1_D, S2_D) in eine binäre Information umzuwandeln, die an die Überwachungs- und Steuereinrichtung zu senden ist und für einen geschalteten Zustand oder einen nicht geschalteten Zustand jedes Ausgangs des Detektors (D) repräsentativ ist,
- wobei die Verarbeitungseinheit (UC) dafür ausgelegt ist, für jeden Ausgang des Detektors (D) Vergleichsfunktionen, die es ermöglichen, den Übergang zu einem hohen Potential oder den Übergang zu einem niedrigen Potential jedes Ausgangs des Detektors (D) zu detektieren, und eine logische Funktion, die es ermöglicht, die Funktionslogik des Detektors (D) zu berücksichtigen, an den die Schnittstelle (INT) angeschlossen ist, auszuführen.

2. Universalschnittstelle (INT) nach Anspruch 1, **dadurch gekennzeichnet, dass** die Verarbeitungseinheit (UC) aufweist:

- eine erste Vergleichseinheit (10) für einen oberen Schwellenwert, die mit dem zweiten Anschlusspunkt verbunden ist und dazu eingerichtet ist, das erste Detektorausgangssignal (S1_D), das am ersten Ausgang des Detektors anliegt, mit einem oberen Schwellenwert ($V_{seuil+}$) zu vergleichen, um am Ausgang ein erstes Vergleichssignal zu erzeugen, und eine erste Vergleichseinheit (20) für einen unteren Schwellenwert, die mit dem zweiten Anschlusspunkt verbunden ist und dazu eingerichtet ist, das erste Detektorausgangssignal (S1_D), das am ersten Ausgang des Detektors anliegt, mit einem unteren Schwellenwert ($V_{seuil-}$) zu vergleichen, um am Ausgang ein zweites Vergleichssignal zu erzeugen,
- eine erste logische Einheit (30), die mit dem Ausgang der ersten Vergleichseinheit (10) für einen oberen Schwellenwert und der ersten Vergleichseinheit (20) für einen unteren Schwellenwert verbunden ist und eine logische Verarbeitungsfunktion umfasst, die dazu eingerichtet ist, ein erstes Schnittstellenausgangssignal (S1-I) in Abhängigkeit von dem ersten Vergleichssignal und dem zweiten Vergleichssignal zu erzeugen,
- eine zweite Vergleichseinheit (11) für einen oberen Schwellenwert, die mit dem vierten Anschlusspunkt verbunden ist und dazu eingerichtet ist, das zweite Detektorausgangssignal (S2_D), das am zweiten Ausgang des Detektors (D) anliegt, mit einem oberen Schwellenwert

($V_{seuil+}$) zu vergleichen, um am Ausgang ein erstes Vergleichssignal zu erzeugen, und eine zweite Vergleichseinheit (21) für einen unteren Schwellenwert, die mit dem vierten Anschlusspunkt verbunden ist und dazu eingerichtet ist, das zweite Detektorausgangssignal (S2_D), das am zweiten Ausgang des Detektors (D) anliegt, mit einem unteren Schwellenwert ($V_{seuil-}$) zu vergleichen, um am Ausgang ein zweites Vergleichssignal zu erzeugen,
- eine zweite logische Einheit (31), die mit dem Ausgang der zweiten Vergleichseinheit (11) für einen oberen Schwellenwert und der zweiten Vergleichseinheit (21) für einen unteren Schwellenwert verbunden ist und eine logische Verarbeitungsfunktion umfasst, die dazu eingerichtet ist, ein zweites Schnittstellenausgangssignal (S2-I) in Abhängigkeit von dem ersten Vergleichssignal und dem zweiten Vergleichssignal zu erzeugen.

3. Universalschnittstelle nach Anspruch 1 oder 2, **dadurch gekennzeichnet, dass** der Verbinder (40) einen fünften Anschlusspunkt aufweist.

4. Detektionssystem, welches einen Detektor (D) aufweist und **dadurch gekennzeichnet ist, dass** es eine Universalschnittstelle (INT) gemäß einem der Ansprüche 1 bis 3 aufweist, die mit dem Detektor verbunden ist.

5. System nach Anspruch 4, **dadurch gekennzeichnet, dass** der Detektor (D) zweidrähtig, dreidrähtig oder vierdrähtig ist.

6. System nach Anspruch 4 oder 5, **dadurch gekennzeichnet, dass** es eine Überwachungs- und Steuereinrichtung aufweist, welche am Eingang das erste Schnittstellenausgangssignal (S1-I) und das zweite Schnittstellenausgangssignal (S2-I) empfängt.

7. System nach Anspruch 4 oder 5, **dadurch gekennzeichnet, dass** es einen Oszillator aufweist, welcher am Eingang das erste Schnittstellenausgangssignal (S1-I) und das zweite Schnittstellenausgangssignal (S2-I) empfängt, und dadurch, dass der Oszillator Mittel zur Erzeugung eines Ausgangssignals (SOSC) aufweist, dessen Frequenz entsprechend dem Zustand des ersten Schnittstellenausgangssignals (S1-I) und dem Zustand des zweiten Schnittstellenausgangssignals (S2-I) variiert.

8. System nach Anspruch 7, **dadurch gekennzeichnet, dass** es eine Überwachungs- und Steuereinrichtung aufweist, die am Eingang das Ausgangssignal (SOSC) des Oszillators (OSC) empfängt.

**Claims**

1. A universal interface (INT) arranged to be positioned between a detector (D) and a monitoring-control unit of equipment, said interface comprising:

   - a connector (40) with at least four input connection points configured for being connected to the detector (D) and comprising a first connection point designed to receive a first electrical potential (V+) and for being connected to a first input of the detector, a second connection point designed to be connected to a first output of the detector for receiving a first detector output signal (S1_D), a third connection point designed to receive a second electrical potential (V-) and for being connected to a second input of the detector, a fourth connection point designed to be connected to a second output of the detector for receiving a second detector output signal (S2_D),
   - **characterized in that** it comprises:
   - a processing unit (UC) arranged for converting each detector output signal (S1_D, S2_D) into binary information to be sent to the monitoring-control unit of equipment and which is representative of a switched status or of a non-switched status of each output of the detector (D),
   - the processing unit (UC) being configured to implement, for each output of the detector (D), comparison functions allowing to detect the transition to a high potential or the transition to a low potential of each output of the detector (D), and a logic function allowing the logic of operation of the detector (D) to which the interface (INT) is connected to be taken into account.

2. The universal interface (INT) as claimed in claim 1, **characterized in that** the processing unit (UC) comprises:

   - a first high threshold comparison unit (10) connected to the second connection point and arranged for comparing the first detector output signal (S1_D) applied to the first output of the detector with a high threshold value ($V_{threshold+}$) for the purpose of generating at the output a first comparison signal, and a first low threshold comparison unit (20) connected to the second connection point and arranged for comparing the first detector output signal (S1_D) applied to the first output of the detector with a low threshold value ($V_{threshold-}$) for generating at the output a second comparison signal,
   - a first logic unit (30) connected to the output of the first high threshold comparison unit (10) and of the first low threshold comparison unit (20) and comprising a processing logic function arranged for generating a first interface output signal (S1_I) as a function of the first comparison signal and of the second comparison signal,
   - a second high threshold comparison unit (11) connected to the fourth connection point and arranged for comparing the second detector output signal (S2_D) applied to the second output of the detector (D) with a high threshold value ($V_{threshold+}$) for the purpose of generating at the output a first comparison signal, and a second low threshold comparison unit (21) connected to the fourth connection point and arranged for comparing the second detector output signal (S2_D) applied to the second output of the detector (D) with a low threshold value ($V_{threshold-}$) for generating at the output a second comparison signal,
   - a second logic unit (31) connected to the output of the second high threshold comparison unit (11) and of the second low threshold comparison unit (21) and comprising a processing logic function arranged for generating a second interface output signal (S2_I) as a function of the first comparison signal and of the second comparison signal.

3. The universal interface as claimed in either of claims 1 and 2, **characterized in that** the connector (40) comprises a fifth connection point.

4. A detection system comprising a detector (D) and **characterized in that** it comprises a universal interface (INT) according to one of claims 1 to 3 connected to said detector.

5. The system as claimed in claim 4, **characterized in that** the detector (D) has two wires, three wires or four wires.

6. The system as claimed in either of claims 4 and 5, **characterized in that** it comprises a monitoring-control unit of equipment receiving at the input the first interface output signal (S1_I) and the second interface output signal (S2_I).

7. The system as claimed in either of claims 4 and 5, **characterized in that** it comprises an oscillator receiving at the input the first interface output signal (S1_I) and the second interface output signal (S2_I) and **in that** said oscillator comprises means for generating an output signal (Sosc) whose frequency varies according to the status of the first interface output signal (S1_I) and the status of the second interface output signal (S2_I).

8. The system as claimed in claim 7, **characterized in that** it comprises a monitoring-control unit of equipment receiving at the input the output signal ($S_{OSC}$)

**EP 2 913 685 B1**

from the oscillator (OSC).

**Fig. 1A**

+/- ▭ 4

D

NO

+/- 3

**Fig. 1B**

+/- 1

D

NC

+/- ▭ 2

**Fig. 1C**

+ 1

D

4

NO - PNP

- 3

**Fig. 1D**

+ 1

D

2

NC - PNP

- 3

**Fig. 1E**

+ 1

D

4

NO - NPN

- 3

**Fig. 1F**

+ 1

D

2

NC - NPN

- 3

**Fig. 1G**

+ 1

2

D

4

NO/NC - PNP

- 3

**Fig. 1H**

+ 1

2

D

4

NO/NC - NPN

- 3

**Fig. 1I**

+ 1

2

D

4

NC - NPN

NO - PNP

- 3

**Fig. 1J**

+ 1

4

D

2

NO - NPN

NC - PNP

- 3

Fig. 2A

Fig. 2B

*Fig. 2C*

*Fig. 2D*

Fig. 2E

Fig. 2F

**Fig. 2G**

D  40  INT  V+  UC

NO/NC

S1_D  1  2

10
20
30  S1_I

S2_D  4

11
21
31  S2_I

5  3

V-

PLC

**Fig. 3A**

INT

S1_I

S2_I

OSC

$S_{OSC}$

**Fig. 3B**

S1_I

S2_I

$S_{OSC}$

P1-f1  P2-f2  P3-f3  P4-f4

**Fig. 4**  40

V+

4  3
5
1  2

V-